# EUROPÄISCHE PATENTSCHRIFT

(11) **EP 3 115 662 B1**
(45) Veröffentlichungstag und Bekanntmachung des Hinweises auf die Patenterteilung: **14.03.2018**
(21) Anmeldenummer: 16178076.2
(22) Anmeldetag: 06.07.2016
(51) Int. Cl.: F16K 27/04, F16K 31/06

(54) **HYDRAULIKVENTIL, INSBESONDERE CARTRIDGEVENTIL**
HYDRAULIC VALVE, IN PARTICULAR CARTRIDGE VALVE
VANNE HYDRAULIQUE, EN PARTICULIER VALVE EN CARTOUCHE

(30) Priorität: 09.07.2015 DE 102015111157
(43) Veröffentlichungstag der Anmeldung: 11.01.2017
(73) Patentinhaber: Hilite Germany GmbH, 97828 Marktheidenfeld (DE)
(72) Erfinder: Goll, Jürgen, 97906 Collenberg (DE); Seidenschwann, André, 63526 Erlensee (DE)

(56) Entgegenhaltungen:
- EP-A1- 1 921 359
- WO-A1-2015/037351
- DE-A1-102011 002 150
- DE-A1-102012 215 134
- DE-A1-102013 217 984
- JP-A- 2006 022 816
- US-A1- 2008 072 975
- US-A1- 2015 129 059

## Beschreibung

Die Erfindung betrifft ein Hydraulikventil, insbesondere Cartridgeventil, mit einer Ventilbuchse und einem Ventilkolben, der axial verschieblich in der Ventilbuchse geführt wird und mittels welchem wenigstens ein Arbeitsanschluss, vorzugsweise zwei Arbeitsanschlüsse wahlweise mit einem Versorgungsanschluss und einem Tankabfluss verbindbar ist, und mit Siebelementen, wobei die Anschlüsse als sich bezüglich einer Längsachse der Ventilbuchse in Umfangsrichtung begrenzte erstreckende Langlöcher ausgeformt und jeweils mittels des Siebelementes in Form eines Metallbandes geschützt sind, das mit einem Filterbereich das Langloch abdeckt, wobei das Siebelement in einer das Langloch umgebenden ersten Nut angeordnet ist und in einer von der ersten Nut beidseits ausgehenden zweiten Nut die Ventilbuchse umgreift.

Aus der US 5,247,965 ist bereits ein Cartridgeventil für ein Automatikgetriebe bekannt, das eine Hydraulikbuchse aufweist, die mehrere Anschlussöffnung aufweist, welche als sich in Umfangsrichtung begrenzt erstreckende Langlöcher ausgeformt ist. Um zu verhindern, dass Fremdpartikel das Cartridgeventil festklemmen lassen, ist ein tieferer Bereich in der Hydraulikbuchse vorgesehen, an dem Fremdpartikel - wie Stahlpulver - aufgrund ihres Gewichts absinken. Das Cartridgeventil bietet sich für den lageorientierten Einbau an, da Langlöcher nicht gänzlich um den Umfang der Hydraulikbuchse umlaufen, so dass Bohrungen in einem das Cartridgeventil aufnehmenden Gehäuse direkt von dem Langloch abgehen können.

Aus der DE 195 10 647 C1 ist ein weiteres Cartridgeventil bekannt. Dieses Cartridgeventil weist zwei Versorgungsanschlüsse P, einen Arbeitsanschluss A und einen Tankabfluss T auf. In die Versorgungsanschlüsse P und den Arbeitsanschluss A sind jeweils Einsätze eingesetzt.

Aus der DE 10 2012 215 134 A1 ist ein Fluidsteuerventil mit Filtern bekannt, wobei die Filter als Metallband mit mehreren Abschnitten ausgebildet und in ringförmigen Nuten einer Ventilhülse angeordnet sind. Endabschnitte der Filter überlappen sich und sind miteinander verschweißt.

Der US 2015/0129059 A1 ist ein weiteres Hydraulikventil mit einem bandförmigen Filter zu entnehmen. Der Filter weist einen ersten Endabschnitt mit einer Öffnung auf, welcher mit einem zweiten, einen Filterbereich aufweisenden Endabschnitt verbunden wird. Die Öffnung ist im Bereich von bohrungsförmigen Anschlüssen des Hydraulikventils angeordnet.

Ein gattungsgemäßes Hydraulikventil ist der DE 10 2011 002 150 A1 zu entnehmen. Ein hierin beschriebener Siebeinsatz ist als Metallband mit einteilig angeformten Haltebändern ausgebildet, deren dem Siebeinsatz fernstehenden Enden sich überlappen und mittels Schweißpunkten verschweißt sind.

Aufgabe der Erfindung ist es, ein axial kurzes Hydraulikventil zu schaffen, das vor Fremdpartikeln geschützt und dabei einfach und kostengünstig herstellbar ist.

Diese Aufgabe wird erfindungsgemäß mit den Merkmalen von Patentanspruch 1 gelöst.

Erfindungsgemäß weist das Siebelement eine Filtermaske gleichbleibender Breite auf, die den Filterbereich und an einem ersten Ende einen Schweißbereich aufweist, wobei der Schweißbereich in einem Nutbereich der ersten Nut außerhalb des Langloches angeordnet ist, und sich ein im Vergleich zur Filtermaske schmal ausgebildetes Halteband ausgehend von einem zweiten Ende der Filtermaske erstreckt, das in der zweiten Nut angeordnet die Ventilbuchse umgreift und dessen Endbereich den Schweißbereich der Filtermaske wenigstens teilweise überdeckt und mit dem Schweißbereich verschweißt vorgesehen ist. Durch den in der Filtermaske angeordneten Schweißbereich können das Siebelement sowie die Ventilbuchse einfacher ausgestaltet und gleichzeitig eine prozesssichere Verschweißung hergestellt werden. Ferner können durch die Anordnung der Schweißung im Bereich der Filtermaske die Langlöcher und die Nuten mit sehr geringem Abstand angeordnet werden, wodurch das Hydraulikventil axial sehr kurz gebaut ist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Gleichen oder funktionsgleichen Elementen sind identische Bezugszeichen zugeordnet. Aus Gründen der Übersichtlichkeit ist es möglich, dass die Elemente nicht in allen Figuren mit ihrem Bezugszeichen versehen sind, ohne jedoch ihre Zuordnung zu verlieren. Die Erfindung ist nachfolgend anhand eines Ausführungsbeispiels näher erläutert. Dabei zeigen:
Fig. 1 ein erfindungsgemäßes Hydraulikventil im Längsschnitt;
Fig. 2 ein Siebelement des Hydraulikventils gemäß Fig. 1 in Draufsicht;
Fig. 3 eine vergrößerte Darstellung eines Ausschnittes des Siebelementes gemäß Fig. 2;
Fig. 4 eine Seitenansicht des Hydraulikteils des erfindungsgemäßen Hydraulikventils gemäß Fig. 1;
Fig. 5 eine Draufsicht des Hydraulikteils des erfindungsgemäßen Hydraulikventils gemäß Fig. 1;
Fig. 6 eine perspektivische Darstellung des Hydraulikteils des erfindungsgemäßen Hydraulikventils gemäß Fig. 1; und
Fig. 7 einen Ausschnitt der geschnittenen Ventilbuchse des Hydraulikventils gemäß Fig. 1 und

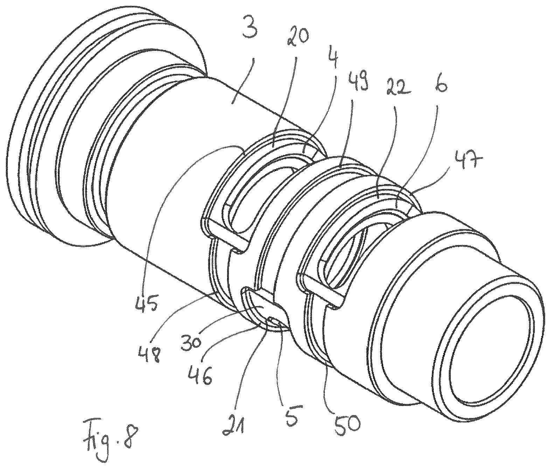

Fig. 8 die Ventilbuchse des Hydraulikventils gemäß Fig. 1 in perspektivischer Darstellung.

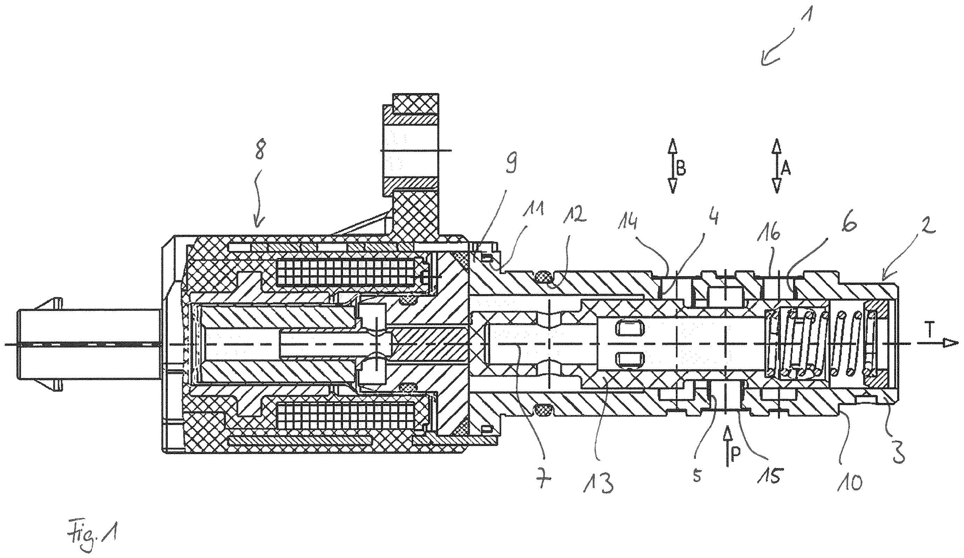

Fig. 1 zeigt ein erfindungsgemäßes Hydraulikventil, welches insbesondere als Cartridgeventil vorgesehen ist, im Längsschnitt mit einem Hydraulikteil 2.

Dieser Hydraulikteil 2 umfasst eine Ventilbuchse 3 mit umfangsmäßig ausgerichteten, sich in Umfangsrichtung begrenzt erstreckenden Langlöchern 4, 5, 6. Die drei Langlöcher 4, 5, 6 sind bezüglich einer Längsachse 7 der Ventilbuchse 3 axial aufeinanderfolgend angeordnet und stellen die nachfolgend beschriebenen Anschlüsse dar. Die Ventilbuchse 3 weist dabei an ihrem einem elektromagnetischen Stellglied 8 nahe stehenden Ende zur Befestigung einen ringförmigen Ansatz 9 auf, der sich radial nach außen erstreckt. An dem anderen Ende ist die Ventilbuchse 3 mittels eines Absatzes 10 im Durchmesser verringert. Das erstgenannte Ende weist am ringförmigen Ansatz 9 eine umlaufende Ringnut 11 zur Aufnahme eines Dichtelementes auf. Zwischen diesem ringförmigen Ansatz 9 und den Langlöchern 4, 5, 6 ist eine weitere umlaufende Ringnut 12 vorgesehen, in die bei montiertem Cartridgeventil ein O-Ring eingesetzt ist, der Anschlüsse nach außen hin zu einem nicht näher dargestellten Gehäuse abdichtet. Dabei ist ein erster Anschluss ein Versorgungsanschluss P, der bezüglich der Längsachse 7 axial mittig zwischen zwei Arbeitsanschlüssen A, B angeordnet ist. Diese beiden Arbeitsanschlüsse A, B sind bezüglich der Längsachse 7 auf der dem Versorgungsanschluss P gegenüber liegenden Seite der Ventilbuchse 3 angeordnet.

Der Versorgungsanschluss P dient der Versorgung des Hydraulikteils 2 mit einem Hydraulikfluid. Die beiden Arbeitsanschlüsse A, B sind mit Kammern einer hydraulikgesteuerten Vorrichtung, bspw. eines Schwenkmotorverstellers einer Nockenwelle hydraulisch verbindbar. Der Positionierung eines in der Ventilbuchse 3 axial bewegbar aufgenommenen Ventilkobens 13 entsprechend, sind die Arbeitsanschlüsse A, B entweder gesperrt, über den Versorgungsanschluss P mit Druck beaufschlagt oder zu einem Tank über einen Tankabfluss T entlastet.

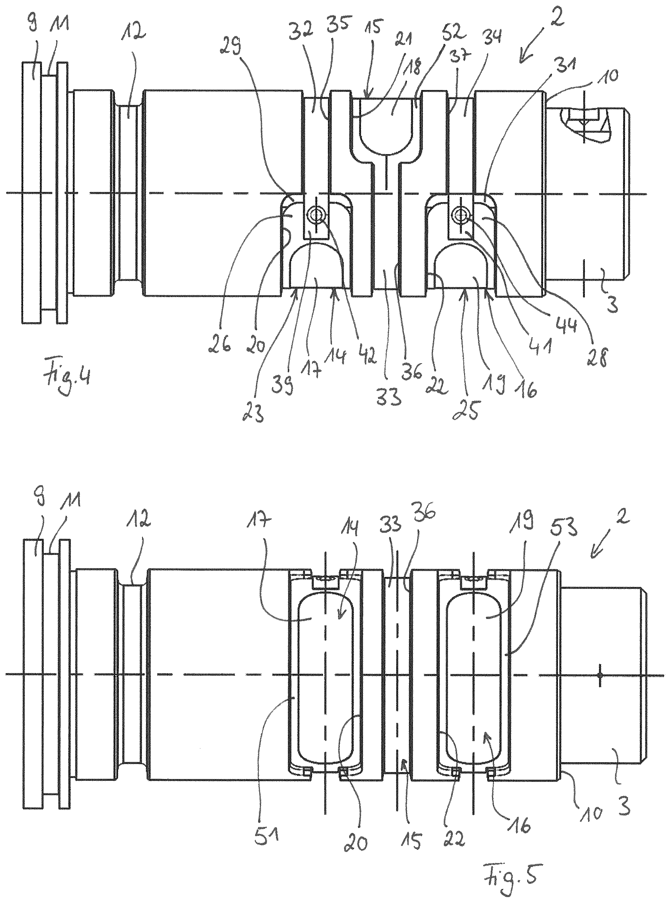

In den Fig. 4, 5 und 6 ist der Hydraulikteil 2 des erfindungsgemäßen Hydraulikventils 1 in verschiedenen Ansichten dargestellt. Es wird ersichtlich, dass die Langlöcher 4, 5, 6 jeweils mittels eines Siebelementes 14, 15, 16 in Form eines Metallbandes geschützt sind, das mit einem Filterbereich 17, 18, 19 das Langloch 4, 5, 6 abdeckt. Die Siebelemente 14, 15, 16 sowie die drei Langlöcher 4, 5, 6 sind dabei baugleich ausgeführt.

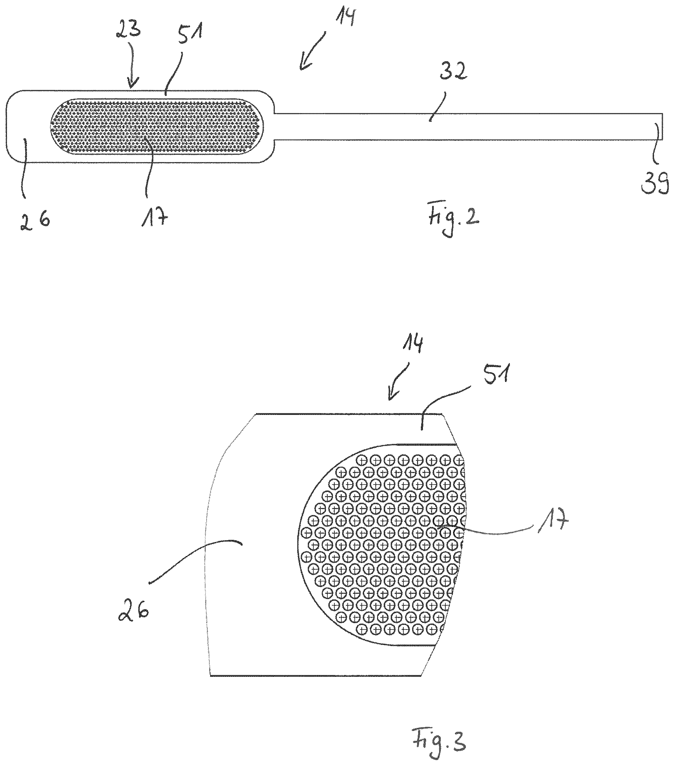

Wie insbesondere Fig. 4 zu entnehmen ist, ist jedes Siebelement 14, 15, 16 in einer das Langloch 4, 5, 6 umgebenden ersten Nut 20, 21, 22 angeordnet.
Das in Fig. 2 und 3 beispielhaft dargestellte Siebelement 14 weist eine Filtermaske 23 gleichbleibender Breite auf, die an einem ersten Ende einen Schweißbereich 26 aufweist, welcher axial neben dem das Langloch 4 abdeckenden Filterbereich 17 angeordnet ist. Dieser Schweißbereich 26 ist in einem Nutbereich 29 außerhalb des Langloches 4 angeordnet. Ein im Vergleich zur Filtermaske 23 schmal vorgesehenes Halteband 32 erstreckt sich ausgehend von einem zweiten Ende der Filtermaske 23 und umgreift in einer zweiten Nut 35 angeordnet die Ventilbuchse 3. Die zweite Nut 35 erstreckt sich von der ersten Nut 20 beidseits ausgehend umlaufend, so dass nach der Montage des Siebelementes 14 in die Ventilbuchse 3 ein Endbereich 39 des Haltebandes 32 den Schweißbereich 26 der Filtermaske 23 teilweise überdeckt und mit dem Schweißbereich 26 verschweißbar ist. Die beschriebenen Siebelemente 14, 15, 16 sind einfach und kostengünstig herstellbar, ebenso wie die Ventilbuchse 3, welche beispielsweise als Drehteil ausgebildet ist. Dabei ist die erste Nut 20, 21, 22 gefräst und die zweite Nut 35, 36, 37 gedreht vorgesehen.

Ein optimaler Übergang zwischen der ersten Nut 20, 21, 22 und der zweiten Nut 35, 36, 37 wird dadurch erzielt, dass die zweite Nut 35, 36, 37 einen größeren Durchmesser als die erste Nut 20, 21, 22 aufweist, so dass ein stufenloser und/oder tangentialer Übergang zwischen den beiden Nuten 20, 21, 22, 35, 36, 37 vorgesehen ist. Das Siebelement 14, 15, 16 liegt hierdurch sicher ohne Entstehung eines Spaltes an der Ventilbuchse 3 an.

Der Endbereich 39, 40, 41 des Haltebandes 32, 33, 34 kann auf oder alternativ unter dem Schweißbereich 26, 27, 28 angeordnet und darauf verschweißt werden. Gemäß dem dargestellten Ausführungsbeispiel wird der Endbereich 39, 40, 41 des Haltebandes 32, 33, 34 auf dem Schweißbereich 26, 27, 28 angeordnet und darauf verschweißt. Hierfür wird der Endbereich 39, 40, 41 mittels eines nicht dargestellten Niederhalters während des Scheißprozesses in Position gehalten. Diese Anordnung des Endbereiches 39, 40, 41 ermöglicht in einfacher Weise, dass das Siebelement 14, 15, 16 problemlos an die Ventilbuchse 3 anlegbar ist und kein Spalt entsteht, durch welchen Fremdpartikel in die Ventilbuchse 3 hineingelangen können.

Die Schweißung kann in Form von Schweißpunkten, beispielsweise als Punktwolke von Schweißpunkten, vorgesehen sein. Es sind jedoch auch eine oder mehrere Schweißnähte denkbar, die beispielsweise linear angeordnet sein können.

Vorteilhafterweise ist die Schweißnaht 42, 43, 44 als geschlossene Kurve - hier beispielsweise kreisförmig - vorgesehen, so dass eine sichere Verschweißung gewährleistet werden kann, falls die Schweißung versehentlich über den Endbereich 39, 40, 41 hinausgeht. Damit kann eine hohe Prozesssicherheit bezüglich einer Abrisskraft der Schweißnaht erzielt werden.

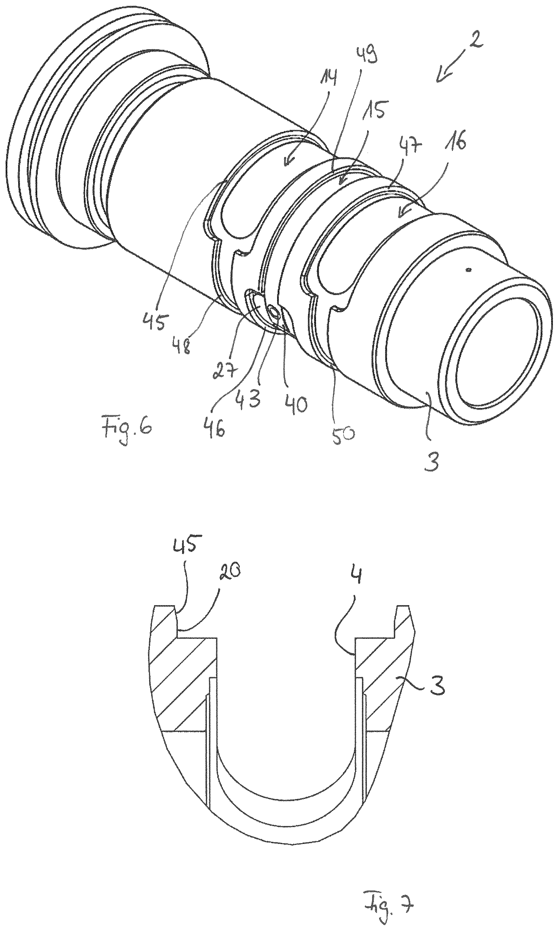

Wie Fig. 7 zu entnehmen ist, welche einen vergrößerten Ausschnitt der Ventilbuchse 3 im Bereich des Langloches 4 im Längsschnitt zeigt, ist an der ersten Nut 20, 21, 22 jeweils eine Phase 45, 46, 47 zur Montageerleichterung des Siebelements 14 vorgesehen. Ebenso weisen die zweiten Nuten 35, 36, 37 jeweils eine Phase 48, 49, 50 auf.

Durch die versetzte Anordnung der Langlöcher 4, 5, 6, die Anordnung der Schweißungen in den Filtermasken 23, 24, 25 sowie die schmale Ausgestaltung der Haltebänder 32, 33, 34 ist es möglich, ein extrem kurz bauendes Hydraulikventil 1 bereit zu stellen. Es ist sogar denkbar, dass zwei nebeneinander liegende erste Nuten 20, 21 bzw. 21, 22 in axialer Richtung überlappend angeordnet sind.

Die Filterbereiche 17, 18, 19 sind beispielsweise durch ein Ätzverfahren herstellbar, bei welchem in einem vorgegebenen Bereich der Filtermaske 23, 24, 25 kleine Löcher herausgeätzt werden. Die Filterbereiche 17, 18, 19 umgibt jeweils ein dünner Rand 51, 52, 53 zur Auflage der Filtermaske 23, 24, 25 in der Nut 20, 21, 22.

Das Cartridgeventil kann insbesondere Anwendung zur Verstellung eines Schwenkmotorverstellers für eine Nockenwelle finden. Dabei kann das Cartridgeventil außerhalb des Schwenkmotorverstellers angeordnet sein. Ebenso kann das Cartridgeventil aber auch innerhalb einer Rotornabe des Schwenkmotorverstellers eingesteckt sein. Dabei handelt es sich dann um ein sogenanntes Zentralventil.
In dem Fall der Anwendung bei einem Schwenkmotorversteller führt das Cartridgeventil das Hydraulikfluid vom Versorgungsanschluss P zu und von den beiden Arbeitsanschlüssen A, B. Zum Verschwenken des Schwenkmotorverstellers wird das Hydraulikfluid vom Versorgungsanschluss P auf den einen Arbeitsanschluss A bzw. B geführt, wohingegen der andere Arbeitsanschluss B bzw. A zu dem Tankabfluss T entlastet wird. Dieser Tankabfluss T kann beispielsweise axial an dem einen und/oder anderen Ende des Cartridgeventils abgeführt werden.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Hydraulikventil (1), insbesondere Cartridgeventil, mit einer Ventilbuchse (3) und einem Ventilkolben (13), der axial verschieblich in der Ventilbuchse (3) geführt wird und mittels welchem wenigstens ein Arbeitsanschluss (A), vorzugsweise zwei Arbeitsanschlüsse (A,B) wahlweise mit einem Versorgungsanschluss (P) und einem Tankabfluss (T) verbindbar ist, und mit Siebelementen (14, 15, 16), wobei die Anschlüsse (A, B, P) als sich bezüglich einer Längsachse (7) der Ventilbuchse (3) in Umfangsrichtung begrenzte erstreckende Langlöcher (4, 5, 6) ausgeformt und jeweils mittels des Siebelementes (14, 15, 16) in Form eines Metallbandes geschützt sind, das mit einem Filterbereich (17, 18, 19) das Langloch (4, 5, 6) abdeckt, wobei das Siebelement (14, 15, 16) in einer das Langloch (4, 5, 6) umgebenden ersten Nut (20, 21, 22) angeordnet ist und in einer von der ersten Nut (20, 21, 22) beidseits ausgehenden zweiten Nut (35, 36, 37) die Ventilbuchse (3) umgreift,
**dadurch gekennzeichnet, dass** das Siebelement (14, 15, 16) eine in der ersten Nut (20, 21, 22) angeordnete Filtermaske (23, 24, 25) gleichbleibender Breite aufweist, die den Filterbereich (17, 18, 19) und an einem ersten Ende einen Schweißbereich (26, 27, 28) aufweist, wobei der Schweißbereich (26, 27, 28) in einem Nutbereich (29, 30, 31) der ersten Nut (20, 21, 22) außerhalb des Langloches (4, 5, 6) angeordnet ist, und sich ein im Vergleich zur Filtermaske (23, 24, 25) schmal ausgebildetes Halteband (32, 33, 34) ausgehend von einem zweiten Ende der Filtermaske (23, 24, 25) erstreckt, das in der zweiten Nut (35, 36, 37) angeordnet die Ventilbuchse (3) umgreift und dessen Endbereich (39, 40, 41) den Schweißbereich (26, 27, 28) der Filtermaske (23, 24, 25) wenigstens teilweise überdeckt und mit dem Schweißbereich (26, 27, 28) verschweißt vorgesehen ist.

2. Hydraulikventil (1) nach Patentanspruch 1, **dadurch gekennzeichnet, dass** der Endbereich (39, 40, 41) des Haltebandes (32, 33, 34) auf dem Schweißbereich (26, 27, 28) angeordnet und verschweißt vorgesehen ist.

3. Hydraulikventil (1) nach Patentanspruch 1, **dadurch gekennzeichnet, dass** der Endbereich (39, 40, 41) des Haltebandes (32, 33, 34) unter dem Schweißbereich (26, 27, 28) angeordnet und verschweißt vorgesehen ist.

4. Hydraulikventil (1) nach einem der vorhergehenden Patentansprüche, **dadurch gekennzeichnet, dass** die Schweißung als Schweißpunkte vorgesehen ist.

5. Hydraulikventil (1) nach einem der vorhergehenden Patentansprüche 1 bis 3, **dadurch gekennzeichnet, dass** die Schweißung als wenigstens eine Schweißnaht vorgesehen ist.

6. Hydraulikventil (1) nach Patentanspruch 5, **dadurch gekennzeichnet, dass** die Schweißnaht bzw. Schweißnähte linear vorgesehen sind.

7. Hydraulikventil (1) nach Patentanspruch 5, **dadurch gekennzeichnet, dass** die Schweißnaht (42, 43, 44) als geschlossene Kurve vorgesehen ist.

8. Hydraulikventil (1) nach Patentanspruch 7, **dadurch gekennzeichnet, dass** die Schweißnaht (42, 43, 44) im Wesentlichen kreisförmig vorgesehen ist.

9. Hydraulikventil (1) nach einem der vorhergehenden Patentansprüche, **dadurch gekennzeichnet, dass** die zweite Nut (35, 36, 37) einen größeren Durchmesser als die erste Nut (20, 21, 22) aufweist und ein stufenloser und/oder tangentialer Übergang zwischen den beiden Nuten (20, 21, 22, 35, 36, 37) vorgesehen ist.

10. Hydraulikventil (1) nach Patentanspruch 9, **dadurch gekennzeichnet, dass** die Ventilbuchse (3) als Drehteil vorgesehen ist und die erste Nut (20, 21, 22) gefräst und die zweite Nut (35, 36, 37) gedreht vorgesehen ist.

11. Hydraulikventil (1) nach einem der vorhergehenden Patentansprüche, **dadurch gekennzeichnet, dass** mehrere bezüglich einer Längsachse (7) der Ventilbuchse (3) axial aufeinander folgende Langlöcher (4, 5, 6) im Umfang versetzt zueinander angeordnet sind.

## Claims

1. Hydraulic valve (1), in particular cartridge valve, having a valve sleeve (3) and a valve piston (13) which is guided in the valve sleeve (3) in an axially displaceable manner and by means of which at least one working port (A), preferably two working ports (A, B), is/are able to be selectively connected to a supply port (P) and to a tank outlet (T), and having screen elements (14, 15, 16), wherein the ports (A, B, P) are formed as elongate holes (4, 5, 6) which extend in a limited manner in the circumferential direction in relation to a longitudinal axis (7) of the valve sleeve (3) and are each protected by means of the screen element (14, 15, 16) in the form of a metal strip which covers the elongate hole (4, 5, 6) with a filter region (17, 18, 19), wherein the screen element (14, 15, 16) is arranged in a first groove (20, 21, 22) which surrounds the elongate hole (4, 5, 6) and engages around the valve sleeve (3) in a second groove (35, 36, 37) which proceeds from the first groove (20, 21, 22) on both sides, **characterized in that** the screen element (14, 15, 16) has a filter mask (23, 24, 25) of constant width, which is arranged in the first groove (20, 21, 22) and which has the filter region (17, 18, 19) and, at a first end, a welding region (26, 27, 28), wherein the welding region (26, 27, 28) is arranged in a groove region (29, 30, 31) of the first groove (20, 21, 22) outside the elongate hole (4, 5, 6), and a retaining strip (32, 33, 34), which is formed so as to be narrow in comparison with the filter mask (23, 24, 25), extends from a second end of the filter mask (23, 24, 25) and, arranged in the second groove (35, 36, 37), engages around the valve sleeve (3), the end region (39, 40, 41) of said strip at least partially overlapping the welding region (26, 27, 28) of the filter mask (23, 24, 25) and being provided so as to be .welded to the welding region (26, 27, 28).

2. Hydraulic valve (1) according to Patent Claim 1, **characterized in that** the end region (39, 40, 41) of the retaining strip (32, 33, 34) is provided so as to be arranged and welded on the welding region (26, 27, 28).

3. Hydraulic valve (1) according to Patent Claim 1, **characterized in that** the end region (39, 40, 41) of the retaining strip (32, 33, 34) is provided so as to be arranged and welded under the welding region (26, 27, 28).

4. Hydraulic valve (1) according to one of the preceding patent claims, **characterized in that** the welding is provided as weld spots.

5. Hydraulic valve (1) according to one of the preceding Patent Claims 1 to 3, **characterized in that** the welding is provided as at least one weld seam.

6. Hydraulic valve (1) according to Patent Claim 5, **characterized in that** the weld seam or weld seams is/are provided so as to be linear.

7. Hydraulic valve (1) according to Patent Claim 5, **characterized in that** the weld seam (42, 43, 44) is provided as a closed curve.

8. Hydraulic valve (1) according to Patent Claim 7, **characterized in that** the weld seam (42, 43, 44) is provided so as to be substantially circular.

9. Hydraulic valve (1) according to one of the preceding patent claims, **characterized in that** the second groove (35, 36, 37) has a larger diameter than the first groove (20, 21, 22), and a stepless and/or tangential transition between the two grooves (20, 21, 22, 35, 36, 37) is provided.

10. Hydraulic valve (1) according to Patent Claim 9, **characterized in that** the valve sleeve (3) is provided as a turned part, and the first groove (20, 21, 22) is provided so as to be milled, and the second groove (35, 36, 37) is provided so as to be turned.

11. Hydraulic valve (1) according to one of the preceding patent claims, **characterized in that** multiple elongate holes (4, 5, 6), which follow one after the other axially in relation to a longitudinal axis (7) of the valve sleeve (3), are arranged so as to be circumferentially offset from one another.

## Revendications

1. Soupape hydraulique (1), en particulier soupape à cartouche,
présentant une douille de soupape (3) et un piston de soupape (13) guidé à coulissement axial dans la douille de soupape (3) et au moyen de laquelle au moins un raccordement de travail (A) et de préférence deux raccordements de travail (A, B) peuvent être reliés sélectivement à un raccordement d'alimentation (P) et à une évacuation de réservoir (T), et
des éléments de tamis (14, 15, 16),
les raccordements (A, B, P) étant configurés comme trous oblongs (4, 5, 6) s'étendant suivant l'axe longitudinal (7) de la douille de soupape (3) en étant limités dans la direction périphérique et étant protégés chacun au moyen de l'élément de tamis (14, 15, 16) qui présente la forme d'un feuillard métallique qui recouvre le trou oblong (4, 5, 6) par une partie de filtre (17, 18, 19),
l'élément de tamis (14, 15, 16) étant disposé dans une première rainure (20, 21, 22) qui entoure le trou oblong (4, 5, 6) et chevauchant la douille de soupape (3) dans une deuxième rainure (35, 36, 37) qui part des deux côtés de la première rainure (20, 21, 22), **caractérisée en ce que**
l'élément de tamis (14, 15, 16) présente un masque de filtre (23, 24, 25) de largeur constante disposé dans la première rainure (20, 21, 22) et qui présente la partie de filtre (17, 18, 19) et sur une première extrémité une partie soudée (26, 27, 28), la partie soudée (26, 27, 28) étant disposée dans une partie (29, 30, 31) de la première rainure (20, 21, 22) à l'extérieur du trou oblong (4, 5, 6) et un feuillard de maintien (32, 33, 34) plus étroit que le masque de filtre (23, 24, 25) s'étendant depuis la deuxième extrémité du masque de filtre (23, 24, 25) et étant disposé dans la deuxième rainure (35, 36, 37) de manière à chevaucher la douille de soupape (3), sa partie d'extrémité (39, 40, 41) recouvrant au moins en partie la partie soudée (26, 27, 28) du masque de filtre (23, 24, 25) et étant soudée à la partie soudée (26, 27, 28).

2. Soupape hydraulique (1) selon la revendication 1, **caractérisée en ce que** la partie d'extrémité (39, 40, 41) du feuillard de maintien (32, 33, 34) est disposée sur la partie soudée (26, 27, 28) et y est soudée.

3. Soupape hydraulique (1) selon la revendication 1, **caractérisée en ce que** la partie d'extrémité (39, 40, 41) du feuillard de maintien (32, 33, 34) est disposée en dessous de la partie soudée (26, 27, 28) et y est soudée.

4. Soupape hydraulique (1) selon l'une des revendications précédentes, **caractérisée en ce que** la soudure est configurée comme points soudés.

5. Soupape hydraulique (1) selon l'une des revendications 1 à 3, **caractérisée en ce que** la soudure est prévue sous la forme d'au moins un cordon de soudure.

6. Soupape hydraulique (1) selon la revendication 5, **caractérisée en ce que** le cordon ou les cordons de soudure prévus sont linéaires.

7. Soupape hydraulique (1) selon la revendication 5, **caractérisée en ce que** le cordon de soudure (42, 43, 44) est prévu sous la forme d'une courbe fermée.

8. Soupape hydraulique (1) selon la revendication 7, **caractérisée en ce que** le cordon de soudure (42, 43, 44) prévu est essentiellement circulaire.

9. Soupape hydraulique (1) selon l'une des revendications précédentes, **caractérisée en ce que** la deuxième rainure (35, 36, 37) présente un diamètre plus grand que la première rainure (20, 21, 22) et **en ce qu'**une transition progressive et/ou tangentielle est prévue entre les deux rainures (20, 21, 22, 35, 36, 37).

10. Soupape hydraulique (1) selon la revendication 9, **caractérisée en ce que** la douille de soupape (3) est prévue comme pièce tournée et **en ce que** la première rainure (20, 21, 22) est fraisée et la deuxième rainure (35, 36, 37) est tournée.

11. Soupape hydraulique (1) selon l'une des revendications précédentes, **caractérisée en ce que** plusieurs trous oblongs (4, 5, 6) qui se suivent les uns les autres axialement suivant l'axe longitudinal (7) de la douille de soupape (3) sont décalés les uns par rapport aux autres à la périphérie.
